Europäisches Patentamt

(19) European Patent Office

Office européen des brevets

(11) Publication number: **0 105 611**
**B1**

(12) **EUROPEAN PATENT SPECIFICATION**

(45) Date of publication of patent specification: **07.02.90**

(51) Int. Cl.⁵: **G 05 B 11/42** // F22G5/12

(21) Application number: **83305097.4**

(22) Date of filing: **02.09.83**

(54) Three-mode analog controllers.

(30) Priority: **03.09.82 US 414698**

(43) Date of publication of application:
**18.04.84 Bulletin 84/16**

(45) Publication of the grant of the patent:
**07.02.90 Bulletin 90/06**

(84) Designated Contracting States:
**DE FR GB IT**

(56) References cited:
DE-A-1 957 592     US-A-3 458 821
DE-A-2 006 757     US-A-3 614 633
DE-A-2 113 930     US-A-3 895 280
DE-B-1 267 453

Kleines Handbuch technischer Regelvorgänge,
W.Oppelt, 1972, pages 242, 321, 354-355, 238-
239, 318

Analysis and Design of Feedback Control
Systems, W.Oppelt, 1960, pages 230-231
E.Samal,"Grundriss der practischer
Regelungstechnik"1983,p.212-216

(73) Proprietor: **THE BABCOCK & WILCOX
COMPANY**
**1010 Common Street P.O. Box 60035**
**New Orleans Louisiana 70160 (US)**

(72) Inventor: **Keyes, Marion A., IV**
**120 Riverstone Drive**
**Chagrin Falls Ohio 44022 (US)**
Inventor: **Lui, Peter K.**
**7170 Hayes Boulevard**
**Mentor Ohio (US)**
Inventor: **Malcolm, Jack W.**
**Deceased (US)**

(74) Representative: **Cotter, Ivan John et al**
**D. YOUNG & CO. 10 Staple Inn**
**London WC1V 7RD (GB)**

(56) References cited:
**Bailey Controls,Service Manual "Type 701 Basic
Controller" pages 7-4 to 7-5**

**MartinHartley Jones,"A practical introduction to
electronic circuits",pages 154-159**

Courier Press, Leamington Spa, England.

# Description

This invention relates to three-mode analog controllers for regulating or processing a signal corresponding to a control variable according to a proportional plus integral plus derivative function. .

Various processes, such as the generation of steam, require the use of contollers which adjust one or more parameters in a process, such as temperature and pressure.

Known controllers include so-called "three mode analog controllers" which are designated proportional-plus-integral-plus-derivative (PID) controllers that obtain an integral value for a signal corresponding to a control variable, a derivative value thereof, and also a proportional value thereof. This provides a smoother regulation of the control parameter. Details of such PID controllers can be found in *"Steam/Its Generation and Use"*, 38th Ed., Babcock & Wilcox Company, 1975, Chapter 35.

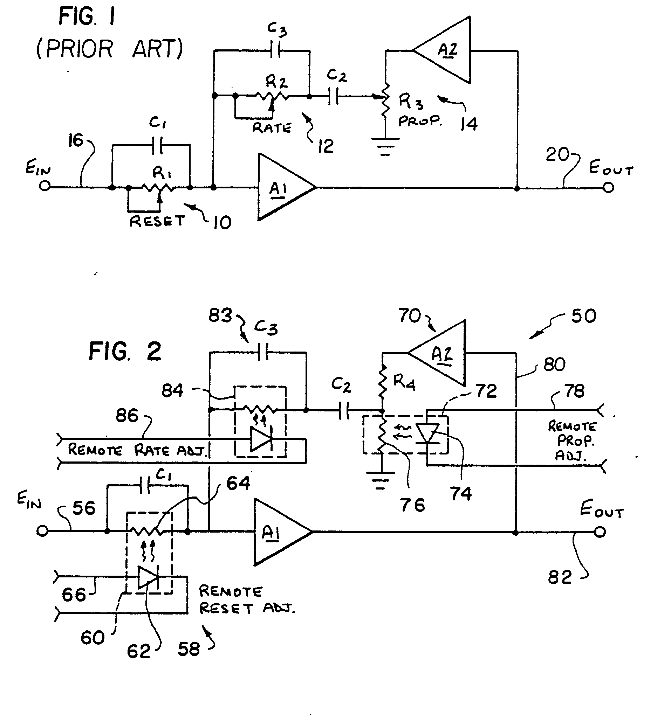

As shown in Figure 1 of the accompanying . drawings, known three-mode controllers include three potentiometers designated 10, 12, and 14. The potentiometer 10 is included in a integration circuit comprising a capacitor C2 and a resistor R1 with a movable tap for adjusting the time constant of integration. This circuit is known as a reset adjustment circuit. A control variable designated $E_{In}$ is applied at a terminal 16. A rate adjustment for adjusting the rate of differentiation of the signal is provided by the potentiometer 12, which is included in a derivative or rate circuit formed of a capacitor C1 as well as a variable resistor R2. For additional details, see Bailey Product Instruction 4570K11—300, published by the Bailey Controls Company of Wickliffe, Ohio, U.S.A. A proportional circuit for applying a selected gain to the signal is adjusted by the potentiometer 14 which includes a variable resistor R3. Operational amplifiers A1 and A2 are also included in the circuitry to produce an output voltage $E_{out}$ at a terminal 20.

The tuning adjustments of the three-mode analog controller shown in Figure 1 have traditionally been set manually by an operator or other responsible plant personnel. Since these settings have to be manually adjusted at the controller, there is little flexibility in judiciously adapting the controller to the dynamics of the process as they occur.

There are many applications in industry which would benefit from the ability to effect a tuning modification as a direct result of actual process disturbances such as load, demand, or feed rate. Most of these opportunities are left unexplored, however, due to the lack of suitable facilities or due to the high cost and cumbersome techniques required.

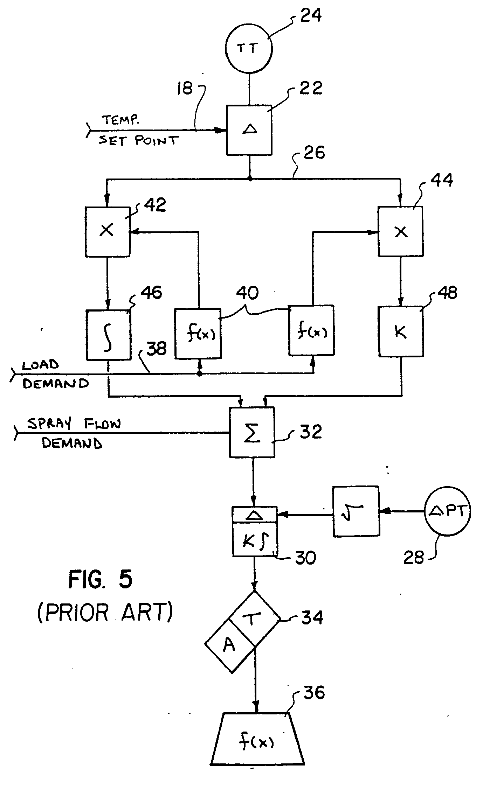

Figure 5 of the accompanying drawings illustrates superheat temperature spray valve control analog logic for a Babcock & Wilcox RB Boiler. The controller is designed to hold final superheat temperature to a preprogrammed set point value applied over a line 18 to a difference unit 22 which also receives the actual temperature from a temperature transmitter 24. The difference or error signal is applied over a line 26 connected to the output of the difference unit 22.

A secondary flow control loop is added to provide much faster and more suitable response. The secondary flow control loop responds to a pressure difference from a pressure transmitter 28 which is processed in a controller 30 with the temperature loop information from a summing unit 32. A valve control 34 is operated, according to the output of the controller 30, to regulate a valve 36.

A load demand signal is supplied over a line 38 to a pair of function generators 40. The load demand signal is introduced to improve the overall load response. The primary temperature loop, having an input at the line 26, exhibits process lags (time delays) which are inversely proportional to the load demand. Consequently, higher gain and lower reset settings are more appropriate for lower load demands. The reset or integration function is provided by a multiplication unit 42, a function generator 40, and an integrating unit 46. The gain settings are achieved by using the function generator 40 and multipliers 44, and a proportional unit 48.

A control system with adaptive process controllers is also disclosed in US Patent No. 3 939 328 to Davis.

According to the present invention there is provided a three-mode analog controller for regulating a signal corresponding to a control variable to produce a control output, the controller comprising:

an amplifier having a feedback loop;

an integrating circuit for integrating the signal with a selected time constant and having a reset adjustment means in series with the amplifier for varying the time constant;

a proportional circuit for applying a selected gain to the signal and having a gain adjustment means in the feedback loop of the amplifier for varying the gain; and

a derivative circuit for obtaining a derivative of the signal at a selected rate and having a rate adjustment means in the feedback loop of the amplifier for varying the rate;

characterised in that the gain adjustment means comprises a light source, a current line connected to the light source for applying a selected current value to the light source for producing a varied light emission from the light source, and a photoresistor which varies in resistance with variations in light emitted by the light source, and in that each of the integrating and derivative circuits includes a field effect transistor and a tuning circuit connected to each field effect transistor for operating each field effect transistor at a selected duty cycle to vary the resistance of each field effect transistor respectively.

According to the present invention described hereinbelow, the potentiometer used in the gain adjustment means of the three-mode analog controller of the prior art is replaced by a photoresistor. The resistance of the photoresistor is changed by controlling the current applied to the input of a light emitting diode (LED) or other light source associated with the photoresistor. The adjustment is, thus, simplified by a voltage level which can be remotely supplied or can be an analog output from a computer. The rate and reset adjustment are each provided by a separate field effect transistor (FET). Preferably each FET in this embodiment is connected to its own tuning circuit. The tuning setting selects a voltage which regulates the rate of change of a saw-tooth waveform. When this waveform reaches a preset reference voltage, a transistor switch in the tuning circuit is turned on to reset the waveform. Each tuning circuit includes a comparator for receiving the reference voltage and the voltage from the transistor switch, with the output of the comparator becoming a square wave with a duty cycle determined by the tuning setting. This waveform is used to drive the FET between its on and off states. The tuning setting thus determines the effective resistance of the rate of reset circuits in the three-mode analog controller.

While the use of a light source and photoresistor combination is known, as illustrated for example in US Patent No. 2 273 537 to Rehder and G. E. Bulletin ETD—2971A, the use of these elements in a three-mode controller provides a particularly simple mechanism for remote adjustment, as can be seen e.g. from DE—A—2 113 930.

By also using field effect transistors, longer rate and reset times can be achieved than in the case of conventional approaches as illustrated in Figure 1 and described above.

The invention will now be further described, by way of illustrative and non-limiting examples, with reference to the accompanying drawings, in which like references designate like items throughout, and in which:

Figure 1 is a schematic representation of a known three-mode controller;

Figure 2 is a schematic representation of a three-mode controller using photoresistor/light source combinations instead of potentiometers for all three modes;

Figure 3 is a schematic representation of a three-mode controller according to an embodiment of the invention;

Figure 4 is a schematic representation of a tuning circuit which can be used both for a reset and for a rate adjustment in the embodiment of Figure 3;

Figure 5 is a block diagram illustrating the operation of a known superheat spray valve control arrangement; and

Figure 6 is a view similar to Figure 5 of a superheat spray valve control arrangement embodying the invention.

Figure 2 of the drawings shows a three-mode controller 50 that includes an input line 56 which carries a voltage $E_{in}$. The voltage $E_{in}$ is a signal corresponding to a controller variable which, for example, may be an error signal between a desired quantity and an actual quantity for a particular process parameter such as temperature or load demand. The signal $E_{in}$ is processed in an integrating circuit which includes a remote reset adjustment circuit 58 in the form of a reset adjustment means 60 comprising a light emitting diode (LED) 62 and a photoresistor 64. As in the known three-mode controller, the integrating circuit also includes a capacitor C2.

A remote reset adjustment current is provided over a line 66 to the LED 62 which, in turn, regulates the resistance of the photoresistor 64 to a desired extent.

The controller 50 also includes a proportional circuit 70 which comprises an operational amplifier A2, a resistor R4, and a gain adjustment means 72. The gain adjustment means 72 comprises a light source, specifically an LED 74, and a photoresistor 76. By applying a current of selected magnitude over a remove proportional adjustment line 78, the LED 74 is lit to a varied extent which adjusts the gain applied by the proportional circuit 70 to a feed back signal received over a line 80 from an output 82 of the controller 50.

Also included in the controller 50 is a derivative circuit which comprises a capacitor C1 and a remove rate adjustment circuit 83 in the form of a rate adjustment means 84. The rate adjustment means 84 also comprises an LED/photoresistor pair and is controlled by current over a line 86 to provide remote rate adjustment. An operational amplifier A1 completes the controller circuit, which functions in the same manner as the known circuit shown in Figure 1 but which can be operated remotely and automatically in an adaptive manner. The functioning of the circuit shown in Figure 1 is set forth in circuit detail in Bailey Product Instruction 4570K11—300 published by the Bailey Controls Company of Wickliffe, Ohio, U.S.A.

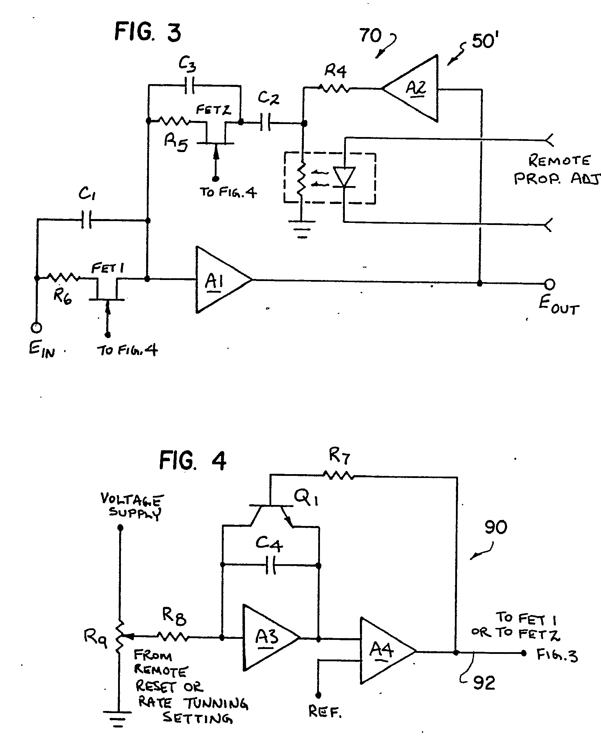

Figure 3 discloses an embodiment of the controller according to the invention, designated 50′, which, while utilising an LED/photoresistor arrangement for the proportional circuit 70, uses field effect transistors FET 1 and FET 2 for the reset and rate adjustment functions respectively. Other functions of the circuit of Figure 3 remain the same as those of Figures 1 and 2.

Figure 4 illustrates an exemplary tuning circuit 90 which can be used to control either of the field effect transistors FET 1 or FET 2, with a duplicate circuit being provided for the other field effect transistor. The circuit 90 includes a switching transistor Q1 which has a capacitor C4 connected across its emitter to collector junction. A resistor R7 connects the base of the transistor Q1 to an output line 92 which may be connected to one of the field effect transistors FET 1, FET 2 or Figure 3.

A set point voltage can be provided by a potentiometer formed by a resistor R9 or can be generated in the process to be controlled. This voltage is directed via a resistor R8 to an operational amplifier A3 and amplified in the operational amplifier A3, which with the transistor switch Q1 produces a sawtooth waveform having a variable duty cycle which varies with the voltage supplied to the circuit 90. This sawtooth waveform is compared with a reference (e.g. a reference voltage) in an amplifier A4 to generate a square wave with the same duty cycle on the output line 92. By connecting the line 92 to one of the field effect transistors FET 1, FET 2 of the circuit 50' of Figure 3, that field effect transistor is driven between its on and off states at a rate which determines the effective resistance of the rate or reset adjustments.

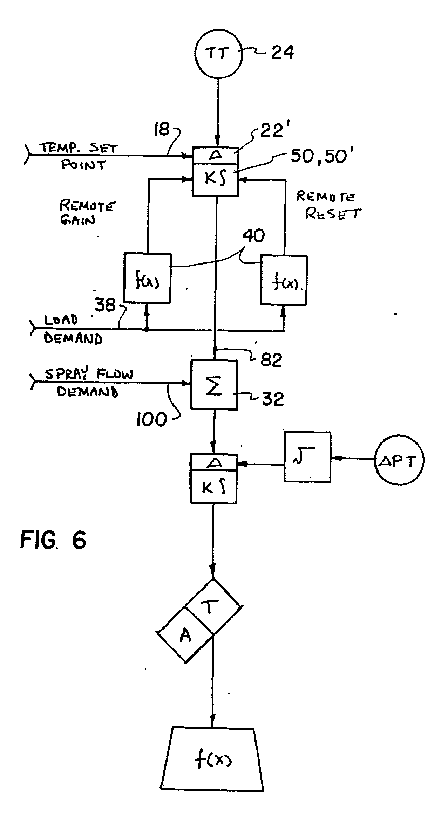

Figure 6 illustrates a possible application for either of the controllers 50, 50' of Figures 2 and 3. The arrangement shown in Figure 6 is a superheat spray valve control arrangement generally similar to that of Figure 5 and will be described largely only in so far as it differs from the arrangement of Figure 5.

A signal is provided by a difference unit 22' which corresponds to the difference between an actual temperature from the temperature transmitter 24 and a temperature set point from the line 18. Function generators 40 are supplied with a demand signal over the line 38 and output into the controller 50, 50' to provide remote gain tuning adjustment and remote reset tuning adjustment setting values. The regulated control value is generated at a controller output line 82 and applied to a summing unit 32 which combines this value with a spray flow demand signal applied over a line 100. The remainder of the circuit is the same as shown in Figure 5.

According to the arrangement described above, benefit is achieved in that the gain and reset function blocks can now be combined into a two mode controller. The conditions for changing the tuning parameters are coupled directly into the controller. With this configuration, further enhancement is possible. Derivative action (rate) can be incorporated readily into a three-mode controller and can be tuned in a similar fashion. Also, a feed forward controller can be utilized to eliminate the summing unit 32 used for the spray signal. The function generators are retained so as to maintain complete flexibility as far as the characterisation of the demand signals with reference to the absolute tuning values. The secondary control a relatively fast flow loop, can remain unchanged.

The arrangement illustrated in Figure 6 significantly reduces the number of pieces of hardware required to implement a more flexible scheme than used in Figure 5. This reduction is equipped directly increases system reliability and availability.

**Claims**

1. A three-mode analog controller for regulating a signal corresponding to a control variable to produce a control output, the controller (50') comprising:

. an amplifier (A1) having a feedback loop;

an integrating circuit (R6, FET 1, C2) for integrating the signal ($E_{in}$) with a selected time constant and having a reset adjustment means (FET 1) in series with the amplifier (A1) for varying the time constant;

a proportional circuit (70) for applying a selected gain to the signal and having a gain adjustment means (72) in the feedback loop of the amplifier (A1) for varying the gain; and

a derivative circuit (R5, FET 2, C1) for obtaining a derivative of the signal at a selected rate and having a rate adjustment means (FET 2) in the feedback loop of the amplifier (A1) for varying the rate;

characterised in that the gain adjustment means (72) comprises a light source (74), a current line (78) connected to the light source for applying a selected current value to the light source for producing a varied light emission from the light source, and a photoresistor (76) which varies in resistance with variations in light emitted by the light source, and in that each of the integrating and derivative circuits includes a field effect transistor (FET 1, FET 2) and a tuning circuit (90) connected to each field effect transistor for operating each field effect transistor at a selected duty cycle to vary the resistance of each field effect transistor respectively.

2. A controller according to claim 1, wherein each tuning circuit (90) comprises an input terminal for receiving a variable selected voltage value, a first operational amplifier (A3) having an input connected to the circuit input terminal and an output, a tuning circuit capacitor (C4) connected in parallel with the first operational amplifer (A3), a switching transitor (Q1) having an emitter-collector junction connected across the tuning circuit capacitor (C4), the tuning circuit having an output (92) connected to the base of the switching transistor (Q1), and a second operational amplifer (A4) having a first input connected to the output of the first operational amplifer (A3) and a second input for receiving a reference voltage, the second operational amplifier (A4) acting as a comparator and having an output connected to the tuning circuit output (92), and the tuning circuit output being connected to a gate of one of the field effect transistors (FET 1, FET 2).

3. A controller according to claim 2 including an input terminal for receiving the signal ($E_{IN}$) and an output terminal for supplying the controller output ($E_{OUT}$), a first resistor (R6) connected to the input terminal and to a first one (FET 1) of the field effect transistors, a first capacitor (C1) connected in parallel across the first resistor (R6) and first field effect transistor (FET 1), said amplifier comprising a third operational amplifier (A1) having an input connected to the first field effect transistor (FET 1) and an output connected to the output terminal, the controller including a second resistor (R5) connected to the input of the third operational amplifier (A1) and to a second one (FET 2) of the field effect transistors, a second capacitor (C3) connected in parallel with the second resistor (R5) and second field effect transistor (FET 2), and a third capacitor (C2) connected in series with the second capacitor (C3) and parallel connected second resistor (R5) and second field effect transistor (FET 2), and the proportional circuit (70) comprising a fourth operational amplifier (A2) connected between the output terminal and the third capacitor (C2), the photoresistor being connected between the third capacitor (C2) and ground.

**Patentansprüche**

Dreifach-Analogregler (PID-Regler) zum Regeln eines Signals, welches einer Regelvariablen entspricht, um einen Regelausgangswert zu erzeugen, wobei der Regler (50') aufweist: einen Verstärker (A1) mit einer Rückkopplunsschliefe; einen Integrier-Schaltkreis (R6, FET 1, C2) zum Integrieren des Signals ($E_{in}$) mit einer gewählten Zeitkonstanten, welcher eine Rückstell-einstelleinrichtung (FET 1) in Reihe mit dem Verstärker (A1) zum Verändern der Zeitkonstante hat; einen Proportionalschaltkries (70), um das Signal um ein gewähltes Maß zu verstärken, und mit einer Verstärkungseinstelleinrichtung (72) in der Rückkopplungsschliefe des Verstärkers (A1), um die Verstärkung zu verändern; und einem Differential-Schaltkreis (R5, FET 2, C1), um eine Ableitung des Signals mit einer vorgewählten Rate zu erhalten, und mit einer Rateneinstelleinrichtung (FET 2) in der Rückkopplungsschliefe des Verstärkers (A1), um die Rate (Zeitkonstante) zu verändern; dadurch gekennzeichnet, daß die Verstärkungseinstelleinrichtung (72) eine Lichtquelle (74), eine Stromleitung (78), welche mit der Lichtquelle verbunden ist, um der Lichtquelle einen ausgewählten Stromwert zuzuführen, um eine veränderbare Lichtabgabe der Lichtquelle zu erzeugen, und einen Fotowiderstand (76) aufweist, dessen Widerstand mit den Änderungen des von der Lichtquelle abgegebenen Lichtes variiert, und daß sowohl der Integral- als auch der Differential-Schaltkreis einen Feldeffekttransistor (FET 1, FET 2) und einen Abstimmkreis (90) aufweisen, welcher mit jedem Feldeffekttransistor verbunden ist, um jeden Feldeffekttransistor mit einem ausgewählten Auslastungsgrad zu betreiben, um den Widerstand des jeweiligen Feldeffekttransistors zu verändern.

2. Regler nach Anspruch 1, wobei jeder Abstimmkreis (90) aufweist: einen Eingangsanschluß für die Aufnahme eines veränderbaren ausgewählten Spannungswertes, einen ersten Operationsverstärker (A3) mit einem Eingang, der an den Eingangsanschluß des Kreises angeschlossen ist und mit einem Ausgang, einen Abstimmkreiskondensator (C4), welcher parallel zu dem ersten Operationsverstärker (A3) geschaltet ist, einen Schalttransistor (Q₁), mit einem Emitter-Kollektorübergang, welcher den Abstimmkreiskondensator (C4) überbrückt, wobei der Abstimmkreis einen Ausgang (92) hat, der mit der Basis des Schalttransistors (Q₁) verbunden ist, sowie einen zweiten Operationsverstärker (A4), der einen ersten Eingang hat, welcher mit dem Ausgang des ersten Operationsverstärkers (A3) verbunden ist, und einen zweiten Eingang für die Aufnahme einer Bezugsspannung hat, wobei der zweite Operationsverstärker (A4) als Komparator wirkt und einen Ausgang hat, welcher mit dem Augang (92) des Abstimmkreises verbunden ist, und wobei der Ausgang des Abstimmkreises mit dem Gate eines der Feldeffekttransistoren (FET 1, FET 2) verbunden ist.

3. Regler nach Anspruch 2, einschließlich eines Eingangsanschlusses für die Aufnahme des Signales ($E_{IN}$) und einen Ausgangsanschluß für die Abgabe des Reglerausgangswertes ($E_{OUT}$), mit einem ersten Widerstand (R6), welcher mit dem Eingangsanschluß und mit einem ersten (FET 1) der Feldeffekttransistoren verbunden ist, einem ersten Kondensator (C1), welcher parallel über den ersten Widerstand (R6) und den ersten Feldeffekttransistor (FET 1) geschaltet ist, wobei der Verstärker einen dritten Operationsverstärker (A1) aufweist, der einen Eingang hat, welcher mit dem ersten Feldeffekttransistor (FET 1) verbunden ist, sowie einen Ausgang, der mit dem Ausgangsanschluß verbunden ist, wobei der Regler einen Zweiten Widerstand (R5) aufweist, der mit dem Eingang des dritten Operationsverstärker (A1) und mit einem zweiten (FET 2) der Feldeffekttransistoren verbunden ist, und mit einem zweiten Kondensator (C3), welcher parallel zu dem zweiten Widerstand (R5) und dem Zweiten Feldeffekttransistor (FET 2) geschaltet ist, und mit einem dritten Kondensator (C2), welcher in Reihe mit dem zweiten Kondensator (C3) und parallel zu dem zweiten Widerstand (R5) und dem zweiten Feldeffekttransistor (FET 2) geschaltet ist, und wobei der Proportionalschaltkreis (70) einen vierten Operationsverstärker (A2) aufweist, welcher zwischen den Ausgangsanschluß und den dritten Kondensator (C2) geschaltet ist, wobei der Fotowiderstand zwischen den dritten Konsensator (C2) und Masse geschaltet ist.

**Revendications**

1. Régulateur analogique à trois modes pour une régulation d'un signal correspondant à une variable de contrôle pour produire une sortie de contrôle, le régulateur (50') comprenant:
un amplificateur (A1) comprenant une boucle de contre-réaction;
un circuit d'intégration (R6, TEC1, C2) pour l'intégration du signal ($E_{In}$) avec une constante de temps sélectionnée comportant un moyen d'ajustement de compensation (TEC1) en série avec l'amplificateur (A1) pour faire varier la constante de temps;
un circuit proportionnel (70) pour appliquer un gain sélectionné au signal et comportant un moyen d'ajustement de gain (72) dans la boucle de contre-réaction de l'amplificateur (A1) pour faire varier le gain, et
un circuit de dérivation (R5, TEC2, C1) pour obtenir une dérivée du signal à un facteur de dérivation sélectoinné et comportant un moyen d'ajustement de dérivation (TEC2) dans la boucle de contre-réaction de l'amplificateur (A1) pour faire varier le facteur de dérivation;

caractérisé en ce que le moyen d'ajustement de gain (72) comporte une source lumineuse (74), une ligne de courant (78) connectée à la source lumineuse pour appliquer une valeur de courant sélectionnée à la source lumineuse afin de produire une émission de lumière variée à partir de la source lumineuse, et une photorésistance (76) dont la résistance varie avec des variations en lumière émise par la source lumineuse, et en ce que chacun des circuits d'intégration et de dérivation comprend un transitor à effet de champ (TEC 1, TEC2) et un circuit de réglage (90) connecté à chaque transistor à effet de champ pour commander chaque transistor à effet de champ selon un rapport cyclique sélectionné pour faire varier la résistance de chaque transistor à effet de champ respectivement.

2. Régulateur selon la revendication 1, dans lequel chaque circuit de réglage (90) comprend une borne d'entrée pour recevoir une valeur de ·tension sélectionnée variable, un premier amplificateur opérationnel (A3) comportant une entrée connectée à la borne d'entrée du circuit et une sortie, un condensateur de circuit de réglage (T4) connecté en parallèle au premier amplificateur opérationnel (A3), un transistor de commutation (Q₁) comportant une jonction émetteur-collecteur connecté aux bornes du condensateur de circuit de réglage (C4), le circuit de réglage comportant une sortie (92) connectée à la base du transistor de commutation (Q₁) et un second amplificateur opérationnel (A4) comportant une première entrée connectée à la sortie du premier amplificateur opérationnel (A3) et une second entrée pour recevoir une tension de référence, le second amplificateur opérationnel (A4) agissant comme un comparateur et comportant une sortie connectée à la sortie de circuit de réglage (92), et la sortie de circuit de réglage étant connectée à une grille de l'une des transistors à effet de champ (TEC1, TEC2).

3. Régulateur selon la revendication 2, comportant une borne d'entrée pour recevoir le signal (E$_{IN}$) et une borne de sortie pour produire la sortie du régulateur (E$_{OUT}$), une première résistance (R6) connectée à la borne d'entrée et à un premier transistor (TEC1) des transitors à effect de champ, un premier condensateur (C1) connecté en parallèle aux bornes de la première résistance (R6) et du premier transistor à effet de champ (TEC1), ledit amplificateur comprenant un troisième amplificateur opérationnel (A1) comportant une entrée connectée audit transistor à effet de champ (TEC1) et une sortie connectée à la borne de sortie, le régulateur comprenant une seconde résistance (R5) connectée à l'entrée du troisième amplifacteur opérationnel (A1) et à un second transistor (TEC2) des transistors à effet de champ, un second condensateur (C3) étant connecté en parallèle à la seconde résistance (R5) et au second transistor à effet de champ (TEC2), et un troisième condensateur (C2) étant connecté en série au second condensateur (C3) et étant connecté en parallèle à une seconde résistance (R5) et au second transistor à effet de champ (TEC2), et le circuit proportionnel (70) comprenant un quatrième amplificateur opérationnel (A2) connecté entre la borne de sortie du troisième condensateur (C2), la photorésistance étant connectée entre le troisième condensateur (C2) et une terre.

FIG. 1
(PRIOR ART)

FIG. 2

EP 0 105 611 B1

FIG. 3

$C_3$

$C_2$

$R_4$

70

50'

$\underline{A2}$

FET2

$R_5$

REMOTE
PROP. ADJ.

$C_1$

$\underline{A1}$

FET 1

$R_6$

$E_{OUT}$

$E_{IN}$

TO FIG.4

TO FIG.4

FIG. 4

$R_7$

VOLTAGE
SUPPLY

$Q_1$

90

$C_4$

$R_8$

$R_9$

$\underline{A3}$

$\underline{A4}$

TO FET 1
OR TO FET2

FROM
REMOTE
RESET OR
RATE TUNNING
SETTING

REF.

FIG.3

92

FIG. 5
(PRIOR ART)

FIG. 6